# EUROPEAN PATENT SPECIFICATION

(11) **EP 1 660 798 B1**
(45) Date of publication and mention of the grant of the patent: **18.04.2007**
(21) Application number: 04767939.4
(22) Date of filing: 26.07.2004
(51) Int. Cl.: F16K 1/12

(54) **VALVES FOR DRINKING VESSELS**
VENTILE FÜR TRINKGEFÄSSE
ROBINETS POUR RESERVOIRS DE BOISSONS

(30) Priority: 24.07.2003 GB 0317291
(43) Date of publication of application: 31.05.2006
(73) Proprietor: BW Technologies Limited, Farnham, Surrey GU9 8HT (GB)
(72) Inventor: GRANT, Jon, Crondall, Farnham, Surrey GU10 5QF (GB)
(74) Representative: Townsend, Victoria Jayne
(86) International application number: PCT/GB2004/003213
(87) International publication number: WO 2005/012774

(56) References cited:
- WO-A-00/35775
- FR-A- 1 182 363
- US-A- 4 629 098
- US-A1- 2002 074 369
- US-A1- 2002 148 862

## Description

This invention relates valves for drinking vessels and more especially to valves for selectively providing access to a supply of drinking fluid retained within a portable flexible container from which fluid can be sucked via a drinking tube.

Flexible portable containers for drinkable fluids such as water are conventionally carried on a person's back or chest when travelling through the countryside and less environmentally friendly terrains. ON/OFF valves are employed for many such containers to prevent loss of drinking fluid through spillage and to provide ready access to the fluid when required. There are occasions when there is a need for personnel to wear face masks for protection against, for example, the presence of poisonous substances in the atmosphere. On such occasions it is important that the mask wearer can still gain ready access to drinking fluid without removing the protective mask.

Many valved containers for drinking fluids are of solid construction. These can only be used by inverting or inclining the container and the user blowing into the container outlet to open the valve to enable water to leave the container. Such containers are extremely cumbersome to use particularly if the user is wearing a face mask.

A drinking vessel with a valve has been disclosed in document US 4 629 098.

According to the present invention in one aspect, there is provided a valve for selectively providing access to a supply of drinking fluid retained within a portable flexible container, the valve comprising a tubular body having at one end a stem insertable into an opening in communication with the container and at its other end an outlet through which fluid from the container can leave the valve, a piston mounted for sliding movement within a central bore of the body and resilient means for urging the piston into engagement with an annular seating positioned at the bore end closest to the outlet, and a separable connector means for moving the piston against the action of the resilient means to enable fluid to be drawn from the container past the piston and through the outlet.

The stem may be formed with two or more annular serrations or steps to assist retention within the opening in communication with the container. The container may be connected to the valve through a flexible conduit one end of which defines the opening In communication with the container. In this arrangement, the stepped stem is inserted into that end of the conduit remote from the container. An ON/OFF valve may be positioned within or adjoining one end of the conduit selectively to control the flow of drinking fluid from the container to the valve.

The resilient means may comprise a coil spring positioned between an annular retainer located within the central bore of the body and the opposed end of the piston.

The annular seating may be tapered inwardly towards the outlet of the valve with the piston end closest to the outlet being similarly tapered to provide an effective seal as the piston is urged by the spring into contact with the seating.

The piston may include one or more internal open-ended passageways through which water drawn into the valve can pass to the outlet when the piston is moved away from its seating.

The outlet may be formed in a tubular end piece of the body. In a preferred arrangement, the end of the piston remote from the stem is positioned below the outlet. In this arrangement, the piston is movable from its position In sealing engagement with the annular seating by a male member carried by a conduit through which drinking fluid can be drawn from the container. The male member may comprise a tubular casing in which is mounted a central rod spaced from the internal wall of the casing by an annular seal displaceable through contact with the piston end.

The invention will now be described, by way of example only, with reference to the accompanying diagrammatic drawings in which:-
Figure 1 is a perspective view of a valve in accordance with the invention;
Figure 2 is a side view of the valve shown In Figure 1;
Figure 3 is a sectional view taken along line III-III of Figure 2;
Figure 4 Illustrates In section the valve shown in Figures 1 to 3 when attached through a conduit to a drinking vessel; and
Figure 5 illustrates in section a connection for the valve to a conduit of a face mask.

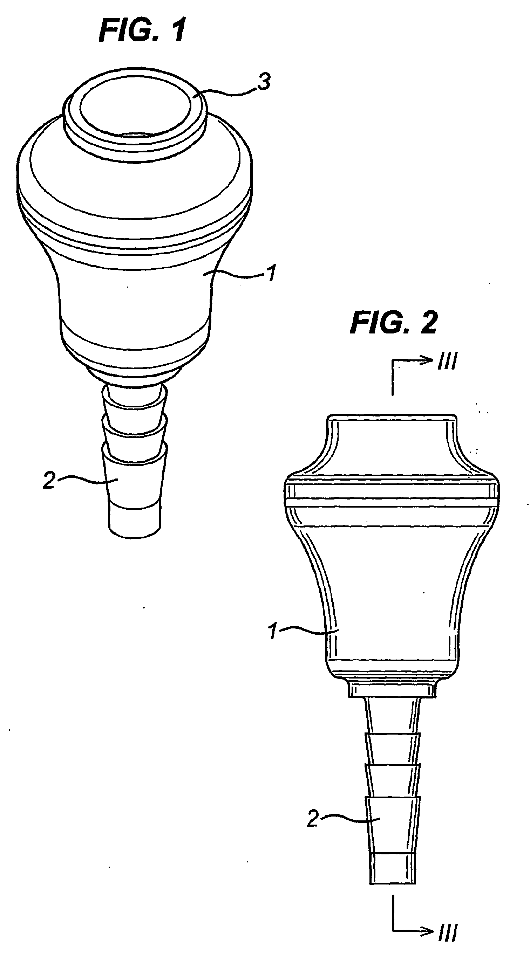

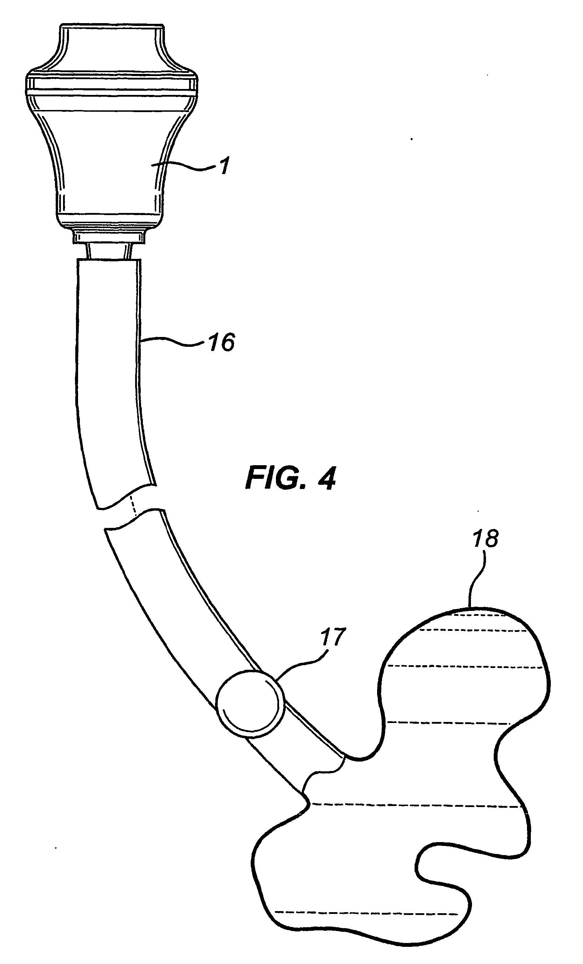

The valve illustrated In Figures 1 to 3 comprises a hollow body 1 having at one end a hollow stem 2 and at its other end an outlet 3. The external surface of the stem 2 is serrated to enable it to be readily inserted into one end of a flexible tube (see Figure 4) of a portable fluid container. The body 1 has a central bore 4 in which is positioned a hollow insert 5 which houses a piston 6. The piston is formed with internal open-ended channels 7 which extend upwardly away from the under surface of the piston and then outwardly to one or more piston side edges. An "O" ring 8 is positioned within an annular recess formed in the end of the insert closest to the outlet 3. As will be seen from Figure 1, the outlet is defined by a tubular end piece 9 of the body. The insert includes an annular tapered seating 11 whose surface matches a tapered end 12 of the piston 6. The piston is urged towards the outlet 3 by a coil spring 14 whose end remote from the piston is positioned on an annular retainer 15.

With the piston 6 moved downwardly against the action of the spring, a continuous passageway for the flow of drinking fluid is provided through the valve.

As will be seen from Figure 4 of the drawings, the serrated stem 2 is forcibly inserted into one end of a flexible tube 16 connected at its other end via an ON/OFF valve 17 to a flexible container 18 containing water. Movement of the valve 17 to its "OFF" position prevents the flow of water from the container. Movement of the valve 17 to its "open" position enables water to be sucked by mouth from the container.

Figure 5 illustrates a connector between the tubular end piece 9 of the valve and a tube 20 through which water can be sucked by the user.

The connector comprises a tubular housing 19 open at one end and closed at its other end by a plate 21. A rod 22 of circular section protrudes from the surface of the plate and is spaced from the internal wall of the housing 19 by flexible annular lining 23 which, when the connector is inserted into the end piece 9, is moved in a direction towards the plate 21 to provide communication between the outlet 3 and the annular space defined between the internal surface of the housing 19 and the external surface of the rod 22. At the same time, the rod engages the opposed end of the piston to move the piston 6 from its seating to enable water to flow into and through the connector to the tube. The outer surface of the housing 19 is formed with an annular recess to receive the "O" ring 8 when the connector is inserted into the end piece 9 of the valve.

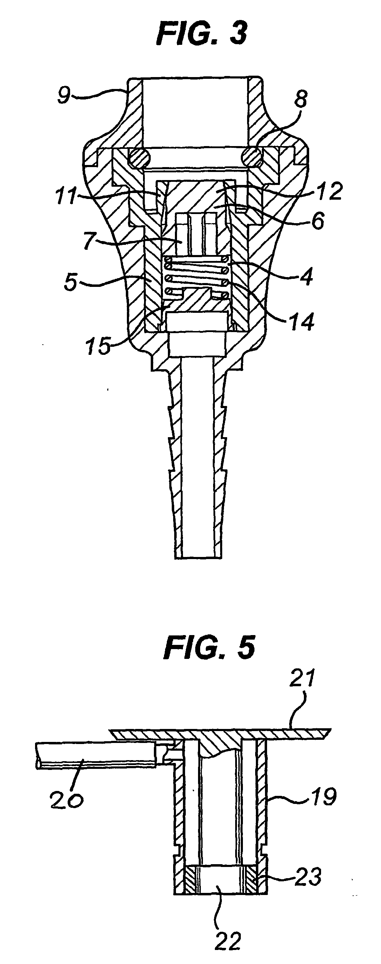

In the position shown in Figure 3, the piston sealingly engages the tapered seating 11 to prevent communication between the bores of the stem 2 and the outlet 3. Downward pressure on the piston end by the rod 22 of the connector moves the piston downwardly away from its seating to enable drinking fluid from the container to pass via the stem through the central bore of the valve and into the outlet. Movement of the lining 23 enables drinking fluid to flow through the connector and into the tube 20.

In use, the end of the tube 20 remote from the connector may be connected to a drinking tube positioned within a face mask. This enables the wearer to access the drinking fluid even when wearing a face mask simply by operating the ON/OFF valve 17.

It will be appreciated that the foregoing is merely exemplary of valves in accordance with the invention and that modifications can readily be made thereto without departing from the true scope of the invention, as defined by the claims.

## Claims

1. A valve for selectively providing access to a supply of drinking fluid retained within a portable flexible container (18), the valve comprising a tubular body (1) having at one end a stern (2) insertable into an opening in communication with the container and at its other end an outlet (3) through which fluid from the container can leave the valve, a piston (6) mounted for sliding movement within central bore (4) of the body (1) and resilient means (14) for urging the piston (6) into engagement with an annular seating (11) positioned at the bore end closest to the outlet **characterised by**, a separable connector means (19-23) for moving the piston (6) against the action of the resilient means (14) to enable fluid to be drawn from the container (18) past the piston and through the outlet.

2. A valve as claimed in claim 1 wherein the stem (2) is formed with two or more annular serrations or steps to assist retention within the opening in communication with the container.

3. A valve as claimed in claim 1 or claim 2 wherein the container (18) is connected to the valve through a flexible conduit (16) one end of which defines the opening in communication with the container.

4. A valve as claimed in claim 3 wherein the stepped stern (2) is inserted Into that end of the conduit (16) remote from the container (18).

5. A valve as claimed in any one of the preceding claims wherein an ON/OFF valve (17) is positioned within or adjoining one end of the conduit (16) selectively to control the flow of drinking fluid from the container to the valve.

6. A valve as claimed in any one of the preceding claims wherein the resilient means comprises a coil spring (14) positioned between an annular retainer (15) located within the central bore (4) of the body (1) and the opposed end of the piston (6).

7. A valve as claimed in any one of the preceding claims wherein the annular seating (11) is tapered inwardly towards the outlet (3) of the valve with the piston end closest to the outlet being similarly tapered to provide an effective seal as the piston Is urged by the spring (14) into contact with the seating (11).

8. A valve as claimed in any one of the preceding claims wherein the piston (6) includes one or more internal open-ended passageways through which water drawn into the valve can pass to the outlet when the piston is moved away from its seating.

9. A valve as claimed in any one of the preceding claims wherein the outlet (3) is formed in a tubular end piece (9) of the body (1).

10. A valve as claimed in any one of the preceding claims wherein the end of the piston remote from the stem (2) is positioned below the outlet (3).

11. A valve as claimed in claim 10 wherein the piston (6) is movable from its position in sealing engagement with the annular seating (11) by a male member (22) carried by a conduit (20) through which drinking fluid can be drawn from the container.

12. A valve as claimed in claim 11 wherein the male member comprises a tubular casing (19) in which is mounted a central rod (22) spaced from the internal wall of the casing by an annular seal (23) displaceable through contact with the piston end.

## Patentansprüche

1. Ventil zur selektiven Bereitstellung eines Zuganges an einen Trinkflüssigkeits-Vorrat, der in einem tragbaren flexiblen Behälter (18) gehalten wird, wobei das Ventil einen rohrförmigen Körper (1), der an einem Ende einen Stutzen (2) aufweist, der in eine Öffnung in Verbindung mit dem Behälter einsetzbar ist, und an seinem anderen Ende einen Auslass (3) aufweist, über den Flüssigkeit von dem Behälter das Ventil verlassen kann, einen Kolben (6), der für eine Gleitbewegung innerhalb einer zentralen Bohrung (4) des Körpers (1) befestigt ist, und elastische Einrichtungen (14) zum Drücken des Kolbens (6) in Eingriff mit einem ringförmigen Sitz (11) umfasst, der an dem dem Auslass nächstgelegenen Ende der Bohrung angeordnet ist,
**gekennzeichnet durch** eine trennbare Verbindungseinrichtung (19-23) zum Bewegen des Kolbens (6) gegen die Wirkung der elastischen Einrichtungen (14), um es der Flüssigkeit zu ermöglichen, aus dem Behälter (18) an dem Kolben vorbei und **durch** den Auslass gesaugt zu werden.

2. Ventil nach Anspruch 1, bei dem der Stutzen (2) mit zwei oder mehr ringförmigen Verzahnungen oder Stufen geformt ist, um das Festhalten in der mit dem Behälter in Verbindung stehenden Öffnung zu unterstützen.

3. Ventil nach Anspruch 1 oder 2, bei dem der Behälter (18) mit dem Ventil über eine flexible Leitung (16) verbunden ist, von der ein Ende die mit dem Behälter in Verbindung stehende Öffnung bildet.

4. Ventil nach Anspruch 3, bei dem der abgestufte Schaft (2) in das von dem Behälter (18) entfernte Ende der Leitung (16) eingesetzt ist.

5. Ventil nach einem der vorhergehenden Ansprüche, bei dem ein EIN/AUS-Ventil (17) in oder benachbart zu einem Ende der Leitung (16) angeordnet ist, um selektiv die Strömung der Trinkflüssigkeit von dem Behälter zu dem Ventil zu steuern.

6. Ventil nach einem der vorhergehenden Ansprüche, bei dem die elastische Einrichtung eine Schraubenfeder (14) umfasst, die zwischen einem ringförmigen Halteteil (15), das in der Mittelbohrung (4) des Körpers (1) angeordnet ist, und dem gegenüberliegenden Ende des Kolbens (6) angeordnet ist.

7. Ventil nach einem der vorhergehenden Ansprüche, bei dem der kreisringförmige Sitz (11) in Richtung auf den Auslass (3) des Ventils nach innen verjüngt ist, wobei das dem Auslass nächstgelegene Ende des Kolbens in ähnlicher Weise verjüngt ist, um eine wirkungsvolle Abdichtung zu schaffen, wenn der Kolben durch die Feder (14) in Kontakt mit dem Sitz (11) gedrückt wird.

8. Ventil nach einem der vorhergehenden Ansprüche, bei dem der Kolben (6) ein oder mehrere innenliegende, ein offenes Ende aufweisende Kanäle einschließt, durch die in das Ventil gezogenes Wasser zu dem Auslass gelangen kann, wenn der Kolben von seinem Sitz fort bewegt wird.

9. Ventil nach einem der vorhergehenden Ansprüche, bei dem der Auslass (3) durch ein rohrförmiges Endstück (9) des Körpers (1) gebildet ist.

10. Ventil nach einem der vorhergehenden Ansprüche, bei dem das von dem Stutzen (2) entfernte Ende des Kolbens unterhalb des Auslasses (3) angeordnet ist.

11. Ventil nach Anspruch 10, bei dem der Kolben (6) aus seiner Position in Dichtungseingriff mit dem kreisringförmigen Sitz (11) heraus durch ein vorspringendes Element (22) beweglich ist, das von einer Leitung (20) getragen wird, durch die Trinkflüssigkeit von dem Behälter gesaugt werden kann.

12. Ventil nach Anspruch 11, bei dem das vorspringende Element ein rohrförmiges Gehäuse (19) umfasst, in dem eine in der Mitte liegende Stange (22) befestigt ist, die von der Innenwand des Gehäuses durch eine ringförmige Dichtung (23) in Abstand gehalten wird, die durch einen Kontakt mit dem Kolbenende verschiebbar ist.

## Revendications

1. Soupape pour procurer de manière sélective un accès à une alimentation d'un fluide de boisson retenu au sein d'un contenant flexible portable (18), la soupape comprenant un corps tubulaire (1) possédant, à une extrémité, une tige (2) apte à s'insérer dans une ouverture mise en communication avec le contenant et, à son autre extrémité, une sortie (3) à travers laquelle du fluide provenant du contenant peut quitter la soupape, un piston (6) monté pour effectuer un mouvement de coulissement au sein d'un alésage central (4) du corps (1) et un moyen résilient (14) pour presser le piston (6) en contact avec un siège annulaire (11) positionnée à l'extrémité de l'alésage la plus proche de la sortie, **caractérisée par** un moyen de raccord séparable (19-23) pour déplacer le piston (6) à l'encontre de l'action exercée par le moyen résilient (14) pour permettre à du fluide d'être aspiré à partir du contenant (18) en passant devant le piston et à travers la sortie.

2. Soupape selon la revendication 1, dans laquelle la tige (2) est constituée par deux cannelures ou gradins annulaires ou plus pour favoriser la rétention au sein de l'ouverture mise en communication avec le contenant.

3. Soupape selon la revendication 1 ou 2, dans laquelle le contenant (18) est relié à la soupape via un conduit flexible (16) dont une extrémité définit l'ouverture mise en communication avec le contenant.

4. Soupape selon la revendication 3, dans laquelle la tige à gradins (2) est insérée dans l'extrémité du conduit (16) éloignée du contenant (18).

5. Soupape selon l'une quelconque des revendications précédentes, dans laquelle une soupape d'ouverture/fermeture (17) vient se disposer au sein d'une extrémité du conduit (16) ou en position adjacente à ladite extrémité, de manière sélective, pour contrôler l'écoulement du fluide de boisson à partir du contenant jusqu'à la soupape.

6. Soupape selon l'une quelconque des revendications précédentes, dans laquelle le moyen résilient comprend un ressort hélicoïdal (14) qui vient se placer entre un dispositif de retenue annulaire (15) prévu au sein de l'alésage central (4) du corps (1) et l'extrémité opposée du piston (6).

7. Soupape selon l'une quelconque des revendications précédentes, dans laquelle le siège annulaire (11) présente une conicité orientée vers l'intérieur en direction de la sortie (3) de la soupape, l'extrémité du piston la plus proche de la sortie présentant une conicité similaire pour obtenir un joint d'étanchéité efficace lorsque le piston est pressé par le ressort (14) en contact avec le siège (11) .

8. Soupape selon l'une quelconque des revendications précédentes, dans laquelle le piston (6) englobe un ou plusieurs passages internes à extrémité ouverte, à travers lesquels peut passer l'eau aspirée dans la soupape et se dirigeant vers la sortie lorsque le piston s'écarte de son siège.

9. Soupape selon l'une quelconque des revendications précédentes, dans laquelle la sortie (3) est réalisée dans une pièce terminale tubulaire (9) du corps (1).

10. Soupape selon l'une quelconque des revendications précédentes, dans laquelle l'extrémité du piston, éloignée de la tige (2) vient se disposer en dessous de la sortie (2).

11. Soupape selon la revendication 10, dans laquelle le piston (6) est mobile par rapport à sa position de mise en contact d'étanchéité avec le siège annulaire (11) via un élément mâle (22) supporté par un conduit (20) à travers lequel du fluide de boisson peut être aspiré à partir du contenant.

12. Soupape selon la revendication 11, dans lequel l'élément mâle comprend un boîtier tubulaire (19) dans lequel est montée une tige centrale (22) espacée de la paroi interne du boîtier par un joint d'étanchéité annulaire (23) apte à se déplacer par contact avec l'extrémité du piston.
